(19) Europäisches Patentamt
European Patent Office
Office européen des brevets

(11) EP 3 897 137 B1

(12) **EUROPEAN PATENT SPECIFICATION**

(45) Date of publication and mention of the grant of the patent:
**30.07.2025 Bulletin 2025/31**

(21) Application number: **19829412.6**

(22) Date of filing: **09.12.2019**

(51) International Patent Classification (IPC):
***A01N 25/30*** (2006.01) ***A01N 43/50*** (2006.01)
***A01P 13/02*** (2006.01) ***A01N 37/22*** (2006.01)
***A01N 43/10*** (2006.01) ***A01N 33/22*** (2006.01)
***A01N 47/36*** (2006.01) ***A01N 43/88*** (2006.01)

(52) Cooperative Patent Classification (CPC):
(C-Sets available)
**A01N 43/50; A01N 25/30; A01N 43/88** (Cont.)

(86) International application number:
**PCT/EP2019/084123**

(87) International publication number:
**WO 2020/126578 (25.06.2020 Gazette 2020/26)**

(54) **HERBICIDAL COMBINATIONS**
HERBIZIDKOMBINATIONEN
COMBINAISONS HERBICIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2018 EP 18213626**

(43) Date of publication of application:
**27.10.2021 Bulletin 2021/43**

(73) Proprietor: **BASF Agrochemical Products B.V.**
**6835 EA Arnhem (NL)**

(72) Inventors:
- **KRAUS, Helmut**
**Research Triangle Park, NC 27709 (US)**
- **ZAGAR, Cyrill**
**Research Triangle Park, NC 27709 (US)**
- **SEISER, Tobias**
**67117 Limburgerhof (DE)**
- **BESSAI, Johannes**
**67117 Limburgerhof (DE)**
- **DIMITRIADI, Tatiana**
**67117 Limburgerhof (DE)**
- **GRIVEAU, Yannick**
**67117 Limburgerhof (DE)**
- **REID, Danielle**
**Research Triangle Park, NC 27709 (US)**
- **VAN THIELEN, Nocha**
**Research Triangle Park, NC 27709 (US)**
- **PETERS, JDavid**
**Research Triangle Park, NC 27709 (US)**
- **BROWN, Jeffrey A**
**Research Triangle Park, NC 27709 (US)**

(74) Representative: **BASF IP Association**
**BASF SE**
**GBI - Z078**
**67056 Ludwigshafen (DE)**

(56) References cited:
**WO-A1-2015/151088** **WO-A1-2015/151088**
**CN-A- 107 602 533** **CN-A- 107 602 533**
**US-A- 6 060 430** **US-A- 6 060 430**
**US-A1- 2007 238 618** **US-A1- 2007 238 618**
**US-A1- 2007 281 859** **US-A1- 2007 281 859**
**US-A1- 2008 305 954** **US-A1- 2008 305 954**
**US-A1- 2014 073 510** **US-A1- 2014 073 510**
**US-A1- 2016 324 154** **US-A1- 2016 324 154**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- TARCÍSIO COBUCCI ET AL: "Seletividade, eficiência de controle de plantas daninhas e persistência no solo de imazamox aplicado na cultura do feijoeiro", PLANTA DANINHA, 1 December 1999 (1999-12-01), XP055565798, Retrieved from the Internet <URL:http://www.scielo.br/pdf/pd/v17n3/09.pdf> [retrieved on 20190306]
- RICHARD N ARNOLD ET AL: "Broadleaf weed control in dry beans with preemergence herbicides followed by postemergence herbicides", 2005 RESEARCH PROGRESS REPORT, 10 March 2005 (2005-03-10), pages 1 - 200, XP055565816, Retrieved from the Internet <URL:http://www.wsweedscience.org/wp-content/uploads/research-report-archive/2005%20WSWS%20RPR.pdf> [retrieved on 20190307]
- BASF: "Viper ADV Herbicide", PESTICIDE LABELS, 16 December 2016 (2016-12-16), pages 1 - 8, XP055565949, Retrieved from the Internet <URL:http://www.city-imaging.com/basf/pdf_files/Viper_ADV/Viper%20ADV%20129.6L%20Booklet%20En%20(81102897)%201612.pdf> [retrieved on 20190307]
- LINS RYAN D. ET AL: "Postemergence Small Broomrape ( Orobanche minor ) Control in Red Clover", WEED TECHNOLOGY, vol. 19, no. 2, 1 June 2005 (2005-06-01), US, pages 411 - 415, XP093073020, ISSN: 0890-037X, DOI: 10.1614/WT-04-175R1
- ZOLLINGER RICHARD ET AL: "Utility of Imazamox in dry beans", PROCEEDINGS OF THE WESTERN SOCIETY OF WEED SCIENCE, vol. 51, 1 January 1998 (1998-01-01), pages 1 - 14, XP093073026
- PETERSEN JAN: "New possibilities for weed control in conventional soybeans", JULIUS-KÜHN-ARCHIV, 1 January 2014 (2014-01-01), DE, pages 692 - 700, XP093073028, ISSN: 1868-9892, DOI: 10.5073/jka.2014.443.087
- BASF: "BAS 831 01H Clentiga", REGISTRATION REPORT, 18 April 2016 (2016-04-18), pages 1 - 165, XP055564592, Retrieved from the Internet <URL:https://www.bvl.bund.de/SharedDocs/Downloads/04_Pflanzenschutzmittel/01_zulassungsberichte/008002-00-00.pdf?__blob=publicationFile&v=2> [retrieved on 20190305]
- KELLY A NELSON ET AL: "Weed Control in Soybean (Glycine max) with Imazamox and Imazethapyr", WEED SIENCE, vol. 46, no. 5, 1 October 1998 (1998-10-01), US, pages 587 - 594, XP055562764, ISSN: 0043-1745, Retrieved from the Internet <URL:https://www.jstor.org/stable/4045966> DOI: 10.1017/S0043174500091141
- "Julius-Kühn-Archiv", vol. 443, 13 March 2014, JULIUS KUEHN-INSTITUT, BUNDESFORSCHUNGSINSTITUT FUER KULTURPFLANZEN, DE, ISSN: 1868-9892, article MARIA ROSENHAUER ET AL: "Impact of imazamox containing herbicides on the development of resistance in black-grass (Alopecurus myosuroides Huds.)", pages: 252 - 260, XP055564561, DOI: 10.5073/jka.2014.443.031
- MIRA KNEZEVIC ET AL: "EFFICACY OF SOME HERBICIDES FOR PRE- AND POSTEMERGENCE WEED CONTROL IN SOYBEAN (Abstract)", HERBOLOGIA, vol. 10, no. 2, 1 December 2009 (2009-12-01), pages 65 - 74, XP055563891, DOI: http://eds.b.ebscohost.com/eds/detail/detail?vid=0&sid=8ec61bc9-5e4a-465b-a7fc-682ae5029f98%40pdc-v-sessmgr03&bdata=JnNpdGU9ZWRzLWxpdmU%3d#db=asx&AN=48973383
- S.A. WALTERS ET AL: "WEED CONTROL IN NO-TILLAGE ZUCCHINI SQUASH PRODUCTION", PROCEEDINGS OF THE FOURTH INTERNATIONAL DATE PALM CONFERENCE : ABU DHABI, UNITED ARAB EMIRATES, MARCH 15 - 17, 2010, no. 638, 1 June 2004 (2004-06-01), BE, pages 201 - 207, XP055563881, ISBN: 978-90-6605-633-6, DOI: 10.17660/ActaHortic.2004.638.26
- DESMOND BROWN ET AL: "Evaluation of Herbicides for Pumpkin (Cucurbita spp.) 1", WEED TECHNOLOGY, vol. 16, no. 2, 1 April 2002 (2002-04-01), pages 282 - 292, XP055563473, ISSN: 0890-037X, DOI: 10.1614/0890-037X(2002)016[0282:EOHFPC]2.0.CO;2
- BERND SIEVERNICH ET AL: "Test Report II", EPO-ELECTRONIC FILE OF EP08160242, 14 March 2011 (2011-03-14), pages 1 - 6, XP055564830, Retrieved from the Internet <URL:https://worldwide.espacenet.com/patent/search/family/034979540/publication/EP1980149A2?q=EP08160242> [retrieved on 20190305]
- BASF: "Cleravo", BASF - SAFETY DATA SHEET, 22 June 2017 (2017-06-22), pages 1 - 12, XP055564765, Retrieved from the Internet <URL:https://www.agricentre.basf.co.uk/Documents/2018-Product-Files/Cleravo_-_QR.pdf> [retrieved on 20190305]
- CHRISTIAN WILLENBORG ET AL: "Emergence timing and management of cleavers in Saskatchewan canola crops", PROJECT FINAL REPORT - ADF20120028, 1 October 2015 (2015-10-01), pages 1 - 40, XP055563889, Retrieved from the Internet <URL:https://www.saskcanola.com/quadrant/System/research/reports/ADF_20120028_Willenborg_Final_Report_Cleavers.pdf> [retrieved on 20190301]

- TARCÍSIO COBUCCI ET AL: "Seletividade, eficiência de controle de plantas daninhas e persistência no solo de imazamox aplicado na cultura do feijoeiro", PLANTA DANINHA, 1 December 1999 (1999-12-01), XP055565798, Retrieved from the Internet <URL:http://www.scielo.br/pdf/pd/v17n3/09.pdf> [retrieved on 20190306]
- RICHARD N ARNOLD ET AL: "Broadleaf weed control in dry beans with preemergence herbicides followed by postemergence herbicides", 2005 RESEARCH PROGRESS REPORT, 10 March 2005 (2005-03-10), pages 1 - 200, XP055565816, Retrieved from the Internet <URL:http://www.wsweedscience.org/wp-content/uploads/research-report-archive/2005%20WSWS%20RPR.pdf> [retrieved on 20190307]
- BASF: "Viper ADV Herbicide", PESTICIDE LABELS, 16 December 2016 (2016-12-16), pages 1 - 8, XP055565949, Retrieved from the Internet <URL:http://www.city-imaging.com/basf/pdf_files/Viper_ADV/Viper%20ADV%20129.6L%20Booklet%20En%20(81102897)%201612.pdf> [retrieved on 20190307]


(52) Cooperative Patent Classification (CPC): (Cont.)

C-Sets

**A01N 25/30, A01N 37/22, A01N 43/10, A01N 47/36;**
**A01N 43/50, A01N 25/30, A01N 37/22, A01N 43/10, A01N 43/88, A01N 47/36;**
**A01N 43/88, A01N 25/30, A01N 37/22, A01N 43/10, A01N 47/36**

## Description

The present invention relates to the use of binary herbicidal combinations of herbicides A and B, as active ingredients for controlling undesirable vegetation in cultures of crop plants, especially in crops which are tolerant to imidazolinone herbicides.

### Background of the invention

In crop protection, it is principally desirable to increase the specificity and the reliability of the action of active compounds. For herbicides in particular, it is desirable that the crop protection products control the harmful plants effectively and, at the same time, are tolerated by the useful plants in question.

Imazamox (IUPAC: 2-[(*RS*)-4-isopropyl-4-methyl-5-oxo-2-imidazolin-2-yl]-5-methoxy-methylnicotinic acid), as well as its salts and esters, is a well-known broad spectrum herbicide from the group of the imidazolinone herbicides (see C.D.S Tomlin (Ed.), The Pesticide Manual, 14th ed., 2006, BCPC Alton, Hampshire, UK, p. 587 ff.). Imazamox is known to be absorbed by the foliage or roots of the plants and effectively blocks the synthesis of branched chain amino acids by inhibition of acetolactate synthase (ALS inhibitor or AHAS inhibitor). Imazamox provides highly effective control of several annual and perennial grass and broadleaf weed species. Imazamox is registered for several legume crops and imidazolinone tolerant crops, such as rice, wheat, corn, lentil, sunflower and oilseed rape (canola). Imidazolinone tolerant crops are also termed Clearfield® crops. The herbicidal activity and the activity spectrum, however, are sometimes limited. In order to achieve a reliable herbicidal action, it has been recommended to apply imazamox in combination with adjuvants, such as Dash®. Formulations of imazamox, comprising the active ingredient as racemate, are marketed under the trade names Beyond®, Raptor® and Sweeper®, Clearfield Vantiga®, Cleranda®, Clearvis® or Cleravo®. Cleravo®, is a suspension concentrate containing 35 g/l imazamox and 250 g/l quinmerac.

Meridian Plus® is a herbicidal product, which comprises the racemic form of imazamox and bentazone-sodium.

Processes for the synthesis of the R-enantiomer of imazamox are known from EP 1 050 533 and US 6,339,158.

The herbicidal effect of combinations of the R-enantiomer of an imidazolinone compound and the R-enantiomer of a second different imidazolinone compound, such as R-imazamox + R-imazapyr, R-imazamox + R-imazaquin, and R-imazamox + R-imazethapyr, was described in EP 913 089. Furthermore, the combination of R-imazethapyr + R-imazapyr demonstrated crop selectivity; no or slight injury, such as stunting or chlorosis, was observed in imidazolinone tolerant corn.

Control of pitted morningglory and purple nutsedge by combinations of R-imazamox + glyphosate is described in US6,214,768.

Bentazone (CAS: 3-(1-methylethyl)-1*H*-2,1,3-benzothiadiazin-4(3*H*)-one 2,2-dioxide), a benzo-thiadiazinone herbicide, as well as its salts, is a selective contact herbicide, inhibiting photosynthesis. (see C.D.S Tomlin (Ed.), The Pesticide Manual, 10th ed., 1994, p. 90 ff. for further references). It is frequently used with co-herbicides. The herbicidal activity and the activity spectrum, however, is only limited.

WO15/104242 teaches that co-application of the imidazolinone herbicides imazethapyr and imazamox with further herbicides selected from fomesafen, sulfentrazone and bentazone herbicides, may lead to enhanced herbicidal activity.

Jing Wei et al. found that the chiral herbicide imazamox poses enantioselective phytotoxicity on maize seedlings: the order of toxicity is R-imazamox > Rac-imazamox > S-imazamox (Bull Environ Contam Toxicol (2016) 96:242-247).

C. Wang et al. discuss in their review on "Enantioselective Phytotoxicity and the Relative Mechanism of Chiral Herbicides" (Current Protein and Peptide Science, 2017, 15-21) enantioselective phytotoxicity of chiral herbicides, i.a. of the imidazolinone Imazapyr. The authors find that the herbicidally active enantiomer, R-imazapyr, displayed more phytotoxicity to non-target plants. They conclude that the reason for the impediment to the development of enantiomer enriched herbicides could be partially attributed to the beneficial balance between/among enantiomers on the herbicidal activity and ecological safety (i.e. phytotoxicity).

US 2008/305954 discloses a composition for controlling the aquatic weed Hydrilla Verticillata, said composition containing very preferably R-imazamox and the second herbicide e.g. benta-zone-

CN 107 602 533 discloses that the herbicidal activity of R-imazamox is higher than that of S- or racemic imazamox and the toxicity in humans and livestock is lower.

US 2014/073510 discloses that adjuvant containing a polar solvent and an alkoxylated phosphate ester increases herbicidal activity of imazamox or bentazone.

According to US 2007/238618, an adjuvant containing a polyalkoxylated alcohol phosphate ester increases uptake of imidazolinone herbicides such as imazamox (including its R-isomer) and thus increases their herbicidal efficiency.

WO 2015/151088 discloses a selective synergistic herbicidal composition containing imazamox and aclonifen.

US 2016/324154 discloses synergy between imazamox/imazethapyr and bentazone 1:3 to 1:15. R-imazamox

can be used in place of imazamox. Said compositions are in particular suitable for combating/controlling undesired vegetation in soybean, peanut, pea, bean, lentil, green gram, black gram, cluster bean, fenugreek, other pulse or leguminous crops, or crops which are tolerant to the action of ALS inhibiting herbicides, such as for example Clearfield™ crops. The composition comprises additionally imazethapyr.

Cobucci, T., and Machado, E. describe in Planta Daninha, (1999), 17, 419-432, that a combination of imazamox and bentazone (30+480 g i.a./ha) is less phytotoxic to edible bean but slightly antagonistic against Bidens pilosa.

Arnold, R.N., et al. disclose the use of dimethanamid-P pre-emergence and imazamox+bentazone post-emergence (0.056/0.032+0.25 lb ai/A) for controlling broad leaf weed in dry beans, published in Research Progress Report of Western Society of Weed Science, March 8-10, 2005, page 101.

The product "Viper® ADV", which is used for controlling broadleaf weeds (including many resistant ones) in succulent peas, soybean and dry beans (including tolerant ones), contains imazamox 20 g/L and bentazone sodium 429 g/L (see "Viper ADV Herbicide", Pesticide Labels, 16 December 2016 (2016-12-16), pages 1-8). In order to manage resistance, it is recommended to use it as tank-mix with further herbicides with different modes of action (see p. 5, col. 1).

LINS, et al. describe in Weed Technology, Vol. 19, Issue 2, June 2005, pp. 411-415, reduced red clover injury when plants are treated with a combination of imazamox and bentazone in comparison to the solo products.

An antagonism between imazamox and bentazone is described by Zollinger, R., et al. in Western Society of Weed Science, Vol. 51, 1998, pp. 1-14.

Petersen J. describes reduced efficacy of the imazamox and bentazone in combination, Julius-Kühn-Archiv, (2014-01-01), pages 692-700.

## Summary of the invention

It is an object of the present invention to provide combinations of herbicides which show enhanced herbicide action against undesirable harmful plants and/or improved compatibility with crop plants, in particular improved compatibility with legumes, such as lentils, peas, soy beans, beans or crop plants which are tolerant to herbicides which inhibit acetolactate synthase (ALS tolerant crops), in particular ALS tolerant small-grain cereal crops, such as, for example, ALS tolerant wheat, ALS tolerant durum, ALS tolerant triticale, ALS tolerant rye and ALS tolerant barley, but also with ALS tolerant corn, ALS tolerant sugar beet, ALS tolerant potato, ALS tolerant rice, ALS tolerant sunflower and/or ALS tolerant oilseed rape (canola). The combination should in particular be useful for controlling undesirable harmful plants in crops such as lentils, peas, soy beans, beans or in crops which are tolerant against imidazolinone herbicides, such as the so called Clearfield® crops mentioned above. The combination should have a good pre- to post-emergence herbicidal activity against harmful plants, in particular against annual and perennial grasses and broadleaf weeds, especially against herbicide resistant harmful plants species.

Furthermore, the combination should have good compatibility with the subsequent crop plants, which are planted after harvest of the imidazolinone tolerant crops (crop rotation, re-cropping).

We have found that these and further objects are achieved, surprisingly, when using herbicidally active combinations consisting of herbicides A and B, and optionally one or more formulation auxiliaries wherein

a. the herbicide A is R-imazamox, any non-racemic mixture of R-imazamox and S-imazamox, wherein the proportion of R-imazamox is at least 80% by weight, or an agriculturally acceptable salt or ester thereof; and

b. the herbicide B is bentazone, or an agriculturally acceptable salt thereof, wherein the relative weight ratio of the herbicide A and the herbicide B is in the range from 1:125 to 1:5, for controlling undesirable vegetation in cultures of crop plants, wherein the crop plant is selected from imidazolinone tolerant crops.

The undesirable vegetation is selected from the genera *Abutilon, Alisma, Alopecurus, Amaranthus, Ambrosia, Ammannia, Ammi, Aneilema, Atriplex, Av-ena, Bidens, Brassica, Butomus, Chenopodium, Cirsium, Convolvulus, Cyperus, Datura, Digitaria, Echinochloa, Fumaria, Galinsoga, Helianthus, Heliotropium, Heteranthera, Hibiscus, Leersia, Leptochloa, Lolium, Matricaria, Orobanche, Oryza, Panicum, Poa, Polygonum, Portulaca, Scirpus, Setaria, Solanum, Sonchus, Sorghum, Stachys, Stellaria,* and Xanthium. In one embodiment the undesirable vegetation comprises herbicide resistant harmful plants species.

The imidazolinone tolerant crops are the crops which, by genetic engineering, genome editing or by breeding, are resistant or tolerant to one or more herbicides, in particular against herbicides from the group of inhibitors of acetolactate synthase (ALS inhibitor compounds), such as imidazolinone herbicides, sulfonylurea herbicides or triazolpyrimidine herbicides and/or pathogens, such as harmful fungi, and/or to attack by insects; in particular crops which, by genetic engineering or by breeding, are resistant or tolerant to imidazolinone herbicides, such as imidazolinone resistant wheat, barley, corn, rice, lentils, peas, preferably rice, lentils, peas.

Detailed description of the invention

Surprisingly, the combinations when used according to the present invention have better herbicidal activity against harmful plants than would have been expected by the herbicidal activity of the individual compounds. In other words, the joint action of the herbicide A and the herbicide B results in an enhanced activity against harmful plants in the sense of a synergy effect (synergism or potentiation), even at low application rates of the herbicide A and the herbicide B. For this reason, the combination of the present invention can, based on the individual components, be used at lower application rates to achieve a herbicidal effect comparable to the individual components.

Moreover, the combinations as used in the present invention provide good pre- and post-emergence herbicidal activity; in particular, the combinations are useful for combating/controlling harmful plants after their emergence (post-emergence). The combinations as used in the present invention also show good crop compatibility, i.e. their use in crops does not result in increased damage, in particular if the combinations are applied in crops tolerant to inhibitors of acetolactate synthase, especially in crops tolerant to imidazolinone herbicides or in crops with natural tolerance to the herbicide B, or in crops with natural tolerance to all of herbicides A and B when compared to the individual application of herbicide A or herbicide B . Moreover, the combinations also show an accelerated action on harmful plants, i.e. they damage harmful plants more quickly when compared with application of the individual herbicides A or B.

As used herein, the terms "controlling" and "combating" are synonyms.

As used herein, the terms "undesirable vegetation" and "harmful plants" are synonyms.

The term "combination" relates both to a composition containing the herbicides A and B as active ingredients and also the combined application of the herbicides A and B, which means that the herbicides A and B are used together for controlling undesirable vegetation in crops and non-crop areas.

When using the combination in the invention for this purpose, the herbicides A and B can be applied simultaneously or in succession to the areas, where undesirable vegetation occurs or may occur. The herbicides A and B, are, in particular, applied in crops, where undesirable vegetation may occur.

The term "composition" is understood as a physical admixture of the herbicides A and B and, optionally, one or more formulation auxiliaries, such as one or more surfactants. The term "composition" includes both a combo-formulation, containing a physical admixture of the herbicides A and B and a ready to use composition, such as an aqueous spray liquor, obtained by tank mixing solo- or combo-formulations of the herbicides A and B.

The term "formulation" includes both formulations, containing a physical admixture of the herbicides A and B as well as kits-of-parts formulations, where the herbicides A and B, are formulated separately.

The formulations generally contain at least one formulation auxiliary, such as one or more surfactants, and at least one liquid or solid carrier.

The combinations used in the invention contain the herbicide A, which is R-imazamox (A-1), any non-racemic mixture of R-imazamox and S-imazamox, wherein the proportion of R-imazamox is at least 80% by weight (A-2), preferably at least 90%, more preferably at least 95%, or an agriculturally acceptable salt or ester thereof.

As imazamox is a carboxylic acid, the combination may comprise R-imazamox (A-1) or any non-racemic mixture of R-imazamox and S-imazamox, wherein the proportion of R-imazamox is at least 80% by weight (A-2), as such or as a salt of R-imazamox (A-3) or any non-racemic mixture of R-imazamox and S-imazamox, wherein the proportion of R-imazamox is at least 80% by weight (A-4), in particular an alkalimetal salt or an ammonium salt or substituted ammonium salt as defined below. The carboxyl group of imazamox may also be present in esterified form, e.g. in the form of a $C_1$-$C_8$-alkoxycarbonyl group or in the form of a $C_1$-$C_4$-alkoxy-$C_1$-$C_4$-alkoxycarbonyl group. Examples of esters are the methyl, ethyl, propyl, isopropyl, butyl, isobutyl, pentyl, mexyl (1-methylhexyl) or isooctyl (2-ethylhexyl) esters. Examples of $C_1$-$C_4$-alkoxy-$C_1$-$C_4$-alkyl esters are the straight-chain or branched $C_1$-$C_4$-alkoxyethyl esters, for example the methoxyethyl, ethoxyethyl or butoxyethyl (butoyl) esters. Usually, the combinations used in the invention contain R-imazamox or any non-racemic mixture of R-imazamox and S-imazamox, wherein the proportion of R-imazamox is at least 80% by weight, as such or as a salt of R-imazamox or any non-racemic mixture of R-imazamox and S-imazamox, wherein the proportion of R-imazamox is at least 80% by weight, in particular an alkalimetal salt or an ammonium salt as defined below.

Suitable salts of A-1 and A-2 include the alkali metal salts, preferably the lithium, sodium and potassium salts, the alkaline earth metals salts, e.g. the calcium and magnesium salts, and the transition metal salts, e.g. the manganese, copper, zinc and iron salts, furthermore ammonium and substituted ammonium salts (hereinafter also termed as organoammonium salts), in which one to four hydrogen atoms of ammonium are replaced by $C_1$-$C_8$-alkyl, $C_1$-$C_4$-alkyl, hydroxy-$C_1$-$C_4$-alkyl, in particular hydroxy-$C_2$-$C_4$-alkyl, $C_1$-$C_4$-alkoxy-$C_1$-$C_4$-alkyl, in particular $C_1$-$C_4$-alkoxy-$C_2$-$C_4$-alkyl, hydroxy-$C_1$-$C_4$-alkoxy-$C_1$-$C_4$-alkyl, in particular hydroxy-$C_2$-$C_4$-alkoxy-$C_2$-$C_4$-alkyl, phenyl or benzyl, preferably ammonium, methylammonium, isopropylammonium, dimethylammonium, diisopropylammonium, trimethylammonium, tetramethylammonium, tetraethylammonium, tetrabutylammonium, pentylammonium, hexylammonium, heptylammonium, 2-hydroxyethylammonium (olamine salt), 2-(2-hydroxyethoxy)eth-1-ylammonium (diglycolamine salt), di(2-hydroxyeth-1-yl)ammonium (= diethanolammonium salt or diolamine salt), tri(2-hydroxyethyl)ammonium (= triethanolammonium salt or trolamine salt), mono-, di- and tri(hydroxypropyl)ammonium (= mono-, di- and tripropanolammonium), benzyltrimethylammonium, benzyltriethylammonium, furthermore phosphonium ion salts and sulfonium salts, e.g. tri($C_1$-$C_4$-alkyl) sulfonium such as trimethylsulfonium, and sulfoxonium salts.

The combinations used in the invention contain the herbicide B, which is bentazone, or an agriculturally acceptable salt thereof. The combination may comprise bentazone as such (B-1) or as a salt (B-2), in particular an alkalimetal salt or an ammonium salt or substituted ammonium salt as defined above for the herbicide A. Usually, the combinations used in the invention contain bentazone as such or as a salt thereof, for example as an alkalimetal salt, in particular as sodium salt.

In the combinations used in the present invention, the relative weight ratio of the herbicide A, calculated as free acid of imazamox, to the herbicide B, calculated as bentazone as such, is in the range from 1:125 to 1:5. Accordingly, in the uses of the invention, the herbicides A and B are preferably applied within these weight ratios. Likewise, the compositions and formulations used in the invention contain the herbicides A and B within these weight ratios.

Particular embodiment of the combination used in the invention is the following combination 1:

Combination 1: Herbicide A: R-imazamox, any non-racemic mixture of R-imazamox and S-imazamox, wherein the proportion of R-imazamox is at least 80% by weight, or a salt thereof;
Herbicide B: bentazone or a salt thereof;

In Combination 1, the weight ratio of herbicide A to herbicide B is as defined above.

In the present invention the undesired vegetation to be controlled are weeds selected from the genera *Abutilon, Alisma, Alopecurus, Amaranthus, Ambrosia, Ammannia, Ammi, Aneilema, Atriplex, Avena, Bidens, Brassica, Butomus, Chenopodium, Cirsium, Convolvulus, Cyperus, Datura, Digitaria, Echinochloa, Fumaria, Galinsoga, Helianthus, Heliotropium, Heteranthera, Hibiscus, Leersia, Leptochloa, Lolium, Matricaria, Orobanche, Oryza, Panicum, Poa, Polygonum, Portulaca, Scirpus, Setaria, Solanum, Sonchus, Sorghum, Stachys, Stellaria,* and *Xanthium.*

According to one embodiment, the weeds are selected from the families *Poaceae* (*Gramineae*), commonly known as grasses and *Cyperaceae*, commonly known as sedges.

According to a preferred embodiment, the weeds are selected from the genera Alo*pecurus, Avena, Cyperus, Digitaria, Echinochloa, Leersia, Leptochloa, Lolium, Oryza, Panicum, Poa, Scirpus, Setaria, Sorgum* and *Triticum*, in particular from the species *Alopecurus myosuroides* (ALOMY), *Avena fatua* (AVEFA), *Cyperus difformis* (CYPDI), *Cyperus eragrostis* (CYPER), *Cyperus microiria* (CYPMI), *Cyperus serotinus* (CYPSE), *Digitaria sanguinalis* (DIGSA), *Echinochloa crus-galli* (ECHCG), *Echinochloa oryzoides* (ECHOR), *Leersia oryzoides* (LEROR), *Leptochloa fusca ssp. fascicularis* (LEFFA), *Leptochloa fusca ssp. uninervia* (LEFUN), *Lolium multiflorum* (LOLMU), *Lolium rigidum* (LOLRI), *Oryza longistaminata* (ORY-LO), *Oryza punctate* (ORYPU), *Oryza sativa* (Weed Rice and Volunteers) (ORYSA), *Panicum dichotomiflorum* (PANMI), *Panicum miliaceum* (PANMI), *Poa annua* (POAAN), *Scirpus maritimus* (SCPMA), *Setaria pumila* (SETPU), *Setaria viridis* (SETVI), *Sorghum halepense* (SORHA).

According to a more preferred embodiment, the weeds are selected from the genera *Cyperus, Digitaria, Echinochloa, Leptochloa, Lolium, Oryza, Panicum, Scirpus, Setaria, Sorgum* and *Triticum*, in particular from the species *Cyperus difformis* (CYPDI), *Cyperus eragrostis* (CYPER), *Cyperus serotinus* (CYPSE), *Digitaria sanguinalis* (DIGSA), *Echinochloa crus-galli* (ECHCG), *Echinochloa oryzoides* (ECHOR), *Leptochloa fusca ssp. fascicularis* (LEFFA), *Leptochloa fusca ssp. uninervia* (LEFUN), *Lolium multiflorum* (LOLMU), *Oryza longistaminata* (ORY-LO), *Panicum dichotomiflorum* (PANMI), *Panicum miliaceum* (PANMI), *Poa annua* (POAAN), *Scirpus maritimus* (SCPMA), *Setaria viridis* (SETVI), *Sorghum halepense* (SORHA).

According to another embodiment, the weeds are selected from the genera *Abutilon, Alisma, Amaranthus, Ambrosia, Ammannia, Ammi, Anneilema, Atriplex, Bidens, Butomus, Brassica, Chenopodium, Cirsium, Convolvulus, Datura, Fumaria, Galinsoga, Helianthus, Heliotropium, Heteranthera, Hibiscus, Matricaria, Orobanche, Polygonum, Portulaca, Solanum, Sonchus, Stachys, Stellaria,* and *Xanthium*, and in particular from the species *Abutilon theophrasti* (ABUTH), *Alisma lanceolatum* (ALSLA), *Alisma plantago-aquatica* (ALSPA), *Amaranthus blitoides* (AMABL), *Amaranthus retroflexus* (AMARE), *Ambrosia artemisiifolia* (AMBEL), *Ammannia coccinea* (AMMCO), *Ammi majus* (AMIMA), *Aneilema keisak* (ANEKE), *Atriplex patula* (ATXPA), *Bidens cernua* (BIDCE), *Bidens frondosa* (BIDFR), *Brassica napus* (BRSNW, BRSNS), *Butomus umbellatus* (BUTUM), *Chenopodium album* (CHEAL), *Chenopodium hybridum* (CHEHY), *Cirsium arvense* (CIRAR), *Convolvulus arvensis* (CONAR), *Datura stramonium* (DATST), *Fumaria officinalis* (FUMOF), *Galinsoga parviflora* (GASPA), *Helianthus tuberosus* (HELTU), *Heliotropium europaeum* (HEOEU), *Heteranthera limosa* (HETLI), *Heteranthera reniformis* (HETRE), *Hibiscus trionum* (HIBTR), *Matricaria chamomilla* (MATCH), *Matricaria inodora* (MATIN), *Orobanche sp*. (ORASS), *Polygonum amphibium* (POLAM), *Polygonum aviculare* (POLAV), *Polygonum convolus* (POLCO), *Polygonum hydropiper* (POLHY), *Polygonum lapathifolium* (POLLA), *Portulaca oleracea* (POROL), *Solanum nigrum* (SOLNI), *Sonchus arvensis* (SONAR), *Stachys annua* (STAAN), *Stellaria media* (STEME), *Xanthium orientale ssp. italicum* (XANSI), *Xanthium spinosum* (XANSP), and *Xanthium strumarium* (XANST).

According to a more preferred embodiment, the weeds are selected from the genera *Abutilon, Alisma, Amaranthus, Ambrosia, Ammannia, Ammi, Anneilema, Bidens, Butomus, Chenopodium, Cirsium, Convolvulus, Heter-*

*anthera, Orobanche, Polygonum, Portulaca, Solanum, Sonchus*, and in particular from the species *Abutilon theophrasti* (ABUTH), *Alisma lanceolatum* (ALSLA), *Alisma plantago-aquatica* (ALSPA), *Amaranthus retroflexus* (AMARE), *Ambrosia artemisiifolia* (AMBEL), *Ammannia coccinea* (AMMCO), *Ammi majus* (AMIMA), *Aneilema keisak* (ANEKE), *Bidens cernua* (BIDCE), *Bidens frondosa* (BIDFR), *Butomus umbellatus* (BUTUM), *Chenopodium album* (CHEAL), *Cirsium arvense* (CIRAR), *Convolvulus arvensis* (CONAR), *Heteranthera limosa* (HETLI), *Heteranthera reniformis* (HETRE), *Orobanche sp.* (ORASS), *Polygonum hydropiper* (POLHY), *Polygonum lapathifolium* (POLLA), *Portulaca oleracea* (POROL), *Solanum nigrum* (SOLNI), *and Sonchus arvensis* (SONAR).

According to another embodiment, the weeds are selected are selected from the genera *Abutilon, Alopecurus, Amaranthus, Ambrosia, Ammi, Atriplex, Avena, Brassica, Chenopodium, Cirsium, Convolvulus, Datura, Digitaria, Echinochloa, Fumaria, Galinsoga, Helianthus, Heliotropium, Hibiscus, Lolium, Matricaria, Orobanche, Panicum, Poa, Polygonum, Portulaca, Setaria, Solanum, Sonchus, Stachys, Stellaria,* and *Xanthium*; and in particular from the species *Abutilon theophrasti* (ABUTH), *Amaranthus retroflexus* (AMARE), *Ambrosia artemisiifolia* (AMBEL), *Ammi majus* (AMIMA), *Chenopodium album* (CHEAL), *Cirsium arvense* (CIRAR), *Convolvulus arvensis* (CONAR), *Digitaria sanguinalis* (DIGSA), *Echinochloa crus-galli* (ECHCG), *Lolium multiflorum* (LOLMU), *Orobanche sp.* (ORASS), *Panicum miliaceum* (PANMI), *Portulaca oleracea* (POROL), *Setaria viridis* (SETVI), *Solanum nigrum* (SOLNI), *and Sonchus arvensis* (SONAR).

According to another embodiment, the compositions and methods of the present invention are useful for controlling weeds, which are herbicide resistant or tolerant.

Exemplary herbicide resistant or tolerant weed species include, but are not limited to, biotypes resistant or tolerant to herbicides selected from the group consisting of acetyl CoA carboxylase (ACCase) inhibitors (HRAC Group A), acetolactate synthase (ALS) inhibitors (HRAC Group B), photosystem II (PS II) inhibitors (HRAC Groups C1, C2 and C3), photosystem I (PS I) inhibitors (HRAC Group D), protoporphyrinogen oxidase (PPO) inhibitors (HRAC Group E), 4-hydroxyphenyl-pyruvate-dioxygenase (HPPD) inhibitors (HRAC Group F1), phytoene desaturase (PDS) inhibitors (HRAC Group F2), carotenoid biosynthesis inhibitors (HRAC Group F3), DOXP synthase inhibitors (HRAC Group F4), 5- enolpymvylshikimate-3-phosphate (EPSP) inhibitors (HRAC Group G), glutamine synthetase inhibitors (HRAC Group H), DHP synthase inhibitors (HRAC Group I), inhibitors of microtubuli assembly (HRAC Group K1), inhibitors of mitosis/microtubuli organization (HRAC Group K2), very long chain fatty acid (VLCFA) inhibitors (HRAC Group K3), Inhibitors of cell wall synthesis (HRAC Group L), uncoupler (membran disruption) (HRAC Group M), Inhibitors of lipid synthesis (HRAC Group N), synthetic auxins (HRAC Group O), auxin transport inhibitors (HRAC Group P) and herbicides with unknown mode of action (HRAC Group Z).

Preferably, the herbicide resistant or tolerant weed species is selected from biotypes resistant or tolerant to herbicides selected from the group consisting of acetyl CoA carboxylase (ACCase) inhibitors (HRAC Group A), acetolactate synthase (ALS) inhibitors (HRAC Group B), photosystem II (PS II) inhibitors (HRAC Groups C1, C2 and C3), protoporphyrinogen oxidase (PPO) inhibitors (HRAC Group E), 4-hydroxyphenyl-pyruvate-dioxygenase (HPPD) inhibitors (HRAC Group F1), phytoene desaturase (PDS) inhibitors (HRAC Group F2), 5-enolpymvylshikimate-3-phosphate (EPSP) inhibitors (HRAC Group G), inhibitors of microtubuli assembly (HRAC Group K1), very long chain fatty acid (VLCFA) inhibitors (HRAC Group K3), Inhibitors of cell wall synthesis (HRAC Group L) and inhibitors of lipid synthesis (HRAC Group N).

More preferably, the herbicide resistant or tolerant weed species is selected from biotypes resistant or tolerant to herbicides selected from the group consisting of acetyl CoA carboxylase (ACCase) inhibitors (HRAC Group A), acetolactate synthase (ALS) inhibitors (HRAC Group B), photosystem II (PS II) inhibitors (HRAC Groups C1, C2 and C3), inhibitors of microtubuli assembly (HRAC Group K1), very long chain fatty acid (VLCFA) inhibitors (HRAC Group K3) and inhibitors of lipid synthesis (HRAC Group N).

In particular, the herbicide resistant or tolerant weed species is selected from biotypes with resistance or tolerance to at least one herbicide selected from the group consisting of acetyl CoA carboxylase (ACCase) inhibitors (HRAC Group A), acetolactate synthase (ALS) inhibitors (HRAC Group B) and photosystem II (PS II) inhibitors (HRAC Groups C1, C2 and C3).

In another embodiment, the resistant or tolerant biotype is selected from the genera *Avena, Echinochloa, Lolium, Setaria, Sorghum, Abutilon, Amaranthus, Chenopodium, Polygonum* and *Stellaria.*

In another embodiment, the weeds are selected from resistant or tolerant biotypes of the genera *Abutilon, Alopecurus, Amaranthus, Ambrosia, Ammi, Atriplex, Avena, Brassica, Chenopodium, Cirsium, Convolvulus, Datura, Digitaria, Echinochloa, Fumaria, Galinsoga, Helianthus, Heliotropium, Hibiscus, Lolium, Matricaria, Orobanche, Panicum, Poa, Polygonum, Portulaca, Setaria, Solanum, Sonchus, Stachys, Stellaria, and Xanthium;* and in particular from the species *Abutilon theophrasti* (ABUTH), *Amaranthus retroflexus* (AMARE), *Ambrosia artemisiifolia* (AMBEL), *Ammi majus* (AMIMA), *Chenopodium album* (CHEAL), *Cirsium arvense* (CIRAR), *Convolvulus arvensis* (CONAR), *Digitaria sanguinalis* (DIGSA), *Echinochloa crus-galli* (ECHCG), *Lolium multiflorum* (LOLMU), *Orobanche sp.* (ORASS), *Panicum miliaceum* (PANMI), *Portulaca oleracea* (POROL), *Setaria viridis* (SETVI), *Solanum nigrum* (SOLNI), *and Sonchus arvensis* (SONAR).

The combinations as used in the present invention are suitable for combating/controlling undesired vegetation in legumes, such as beans, peas, soy beans or in ALS tolerant crops, in particular in ALS tolerant small-grain cereal crops, such as, for example, ALS tolerant wheat, ALS tolerant durum, ALS tolerant triticale, ALS tolerant rye and ALS tolerant barley, but also in ALS tolerant corn, ALS tolerant sugar beet, ALS tolerant potato, ALS tolerant rice, ALS tolerant sunflower and ALS tolerant oilseed rape (canola). The combinations of the present invention are particularly suitable for combating/controlling undesired vegetation in legumes, such as beans, peas and soybean.

The combinations as used in the invention are particularly useful in crops that are tolerant against imidazolinone herbicides, such as Clearfield® crops, e.g. Clearfield® canola, Clearfield® rice, Clearfield® corn, Clearfield® wheat, Clearfield® Sunflower, Clearfield® Lentils, and Cultivance® crops, in particular in Clearfield® Lentils, rice and corn.

If not stated otherwise, the combinations as used in the invention are suitable for application in any variety of the aforementioned crop plants.

The combinations as used in the invention can also be used in crop plants that have been modified by breeding, mutagenesis or genetic engineering, e.g. have been rendered tolerant to applications of specific classes of herbicides, such as imidazolinone herbicides, such as imazamox, auxinic herbicides, such as dicamba or 2,4-D; bleacher herbicides, such as 4-hydroxyphenylpyruvate dioxygenase (HPPD) inhibitors or phytoene desaturase (PDS) inhibitors; acetolactate synthase (ALS) inhibitors, such as sulfonylureas or imidazolinones; enolpyruvyl shikimate 3-phosphate synthase (EPSP) inhibitors, such as glyphosate; glutamine synthetase (GS) inhibitors, such as glufosinate; protoporphyrinogen-IX oxidase inhibitors; lipid biosynthesis inhibitors, such as acetylCoA carboxylase (ACCase) inhibitors; or oxynil (i. e. bromoxynil or ioxynil) herbicides as a result of conventional methods of breeding or genetic engineering; furthermore, plants have been made resistant to multiple classes of herbicides through multiple genetic modifications, such as resistance to both glyphosate and glufosinate or to both glyphosate and a herbicide from another class, such as ALS inhibitors, HPPD inhibitors, auxinic herbicides, or ACCase inhibitors. These herbicide resistance technologies are, for example, described in Pest Management Science 61, 2005, 246; 61, 2005, 258; 61, 2005, 277; 61, 2005, 269; 61, 2005, 286; 64, 2008, 326; 64, 2008, 332; Weed Science 57, 2009, 108; Australian Journal of Agricultural Research 58, 2007, 708; Science 316, 2007, 1185; and references quoted therein. Several cultivated plants have been rendered tolerant to herbicides by mutgenesis and conventional methods of breeding, e. g., Clearfield® crops, such as Clearfield® summer rape (Canola, BASF SE, Germany) being tolerant to imidazolinones, e. g., imazamox, or ExpressSun® sunflowers (DuPont, USA) being tolerant to sulfonyl ureas, e. g., tribenuron. Genetic engineering methods have been used to render cultivated plants, such as soybean, cotton, corn, beets and rape, tolerant to herbicides, such as glyphosate, imidazolinones and glufosinate, some of which are under development or commercially available under the brands or trade names RoundupReady® (glyphosate tolerant, Monsanto, USA), Cultivance® (imidazolinone tolerant, BASF SE, Germany) and LibertyLink® (glufosinate tolerant, Bayer CropScience, Germany).

The combinations as used in the invention can also be used in genetically modified crop plants. The term "genetically modified plants" is to be understood as plants whose genetic material has been modified by the use of recombinant DNA techniques to include an inserted sequence of DNA that is not native to that plant species' genome or to exhibit a deletion of DNA that was native to that species' genome, wherein the modification(s) cannot readily be obtained by cross breeding, mutagenesis or natural recombination alone. Often, a particular genetically modified plant will be one that has obtained its genetic modification(s) by inheritance through a natural breeding or propagation process from an ancestral plant whose genome was the one directly treated by use of a recombinant DNA technique. Typically, one or more genes have been integrated into the genetic material of a genetically modified plant in order to improve certain properties of the plant. Such genetic modifications also include, but are not limited to targeted post-translational modification of protein(s), oligo- or polypeptides. e. g., by inclusion therein of amino acid mutation(s) that permit, decrease, or promote glycosylation or polymer additions such as prenylation, acetylation farnesylation, or PEG moiety attachment.

The combinations as used in the invention can also be used in crop plants that have been modified, e.g. by the use of recombinant DNA techniques to be capable of synthesizing one or more insecticidal proteins, especially those known from the bacterial genus Bacillus, particularly from Bacillus thuringiensis, such as delta-endotoxins, e. g., CrylA(b), CrylA(c), CrylF, CrylF(a2), CryllA(b), CrylllA, CryIIIB(b1) or Cry9c; vegetative insecticidal proteins (VIP), e. g., VIP1, VIP2, VIP3 or VIP3A; insecticidal proteins of bacteria colonizing nematodes, e. g., Photorhabdus spp. or Xenorhabdus spp.; toxins produced by animals, such as scorpion toxins, arachnid toxins, wasp toxins, or other insect-specific neurotoxins; toxins produced by fungi, such as Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxy-steroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilbene synthase, bibenzyl synthase, chitinases or glucanases. In the context of the present invention, these insecticidal proteins or toxins are to be understood expressly also as including pre-toxins, hybrid proteins, truncated or otherwise modified proteins. Hybrid proteins are characterized by a new combination of protein domains, (see, e. g., WO 02/015701). Further examples of such toxins or genetically modified plants capable of

synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g., in the publications mentioned above. These insecticidal proteins contained in the genetically modified plants impart to the plants producing these proteins tolerance to harmful pests from all taxonomic groups of arthropods, especially to beetles (Coleoptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available, such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g., Agrisure® CB) and Bt176 from Syngenta Seeds SAS, France, (corn cultivars producing the Cry1Ab toxin and PAT enzyme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme).

The combinations as used in the invention can also be used in crop plants that have been modified, e.g. by the use of recombinant DNA techniques to be capable of synthesizing one or more proteins to increase the resistance or tolerance of those plants to bacterial, viral or fungal pathogens. Examples of such proteins are the so-called "pathogenesis-related proteins" (PR proteins, see, e.g., EP-A 392 225), plant disease resistance genes (e. g., potato cultivars which express resistance genes acting against Phytophthora infestans derived from the Mexican wild potato, Solanum bulbocastanum) or T4-lysozym (e.g., potato cultivars capable of synthesizing these proteins with increased resistance against bacteria such as Erwinia amylovora). The methods for producing such genetically modified plants are generally known to the person skilled in the art and are described, e.g., in the publications mentioned above.

The combinations as used in the invention can also be used in crop plants that have been modified, e.g. by the use of recombinant DNA techniques to be capable of synthesizing one or more proteins to increase the productivity (e.g., biomass production, grain yield, starch content, oil content or protein content), tolerance to drought, salinity or other growth-limiting environmental factors or tolerance to pests and fungal, bacterial or viral pathogens of those plants.

The combinations as used in the invention can also be used in crop plants that have been modified, e.g. by the use of recombinant DNA techniques to be capable of producing an increased amount of ingredients or new ingredients, which are suitable to improve human or animal nutrition, e. g., oil crops that produce health-promoting long-chain omega-3 fatty acids or unsaturated omega-9 fatty acids (e. g., Nexera® rape, Dow AgroSciences, Canada).

The combinations as used in the present invention can be applied in a conventional manner by a skilled personal familiar with the techniques of applying herbicides. Suitable techniques include spraying, atomizing, dusting, spreading or watering. The type of application depends on the intended purpose in a well known manner; in any case, they should ensure the finest possible distribution of the active ingredients according to the invention.

The combinations can be applied pre- or post-emergence, i.e. before, during and/or after emergence of the undesirable plants. When the combinations are used in crops, they can be applied after seeding and before or after the emergence of the crop plants. The compositions as used in the invention can, however, also be applied prior to seeding of the crop plants.

It is a particular benefit of the combinations when used according to the invention that they have a very good post-emergence herbicide activity, i.e. they show a good herbicidal activity against emerged undesirable plants. Thus, in a preferred embodiment of invention, the combinations are applied post-emergence, i.e. during and/or after, the emergence of the undesirable plants. It is particularly advantageous to use the combinations according to the invention post emergent when the undesirable plant starts with leaf development up to flowering. Since the combinations as used in the present invention show good crop tolerance, even when the crop has already emerged, they can be applied after seeding of the crop plants and, in particular, during or after the emergence of the crop plants.

In any case, the herbicide A and the herbicide B can be applied simultaneously or in succession.

In a preferred embodiment, the combinations as used in the invention are applied in the form of a composition containing the combination of the present invention and a formulation additive, such as one or more surfactants. Preferably, the compositions are dilute aqueous compositions. Such dilute compositions are usually obtained by tank mixing solo- or combo-formulations, containing the herbicide A and the herbicide B, which are formulated jointly or separately.

It is also possible to apply several compositions successively, where compositions contain only one herbicide compound selected from the herbicide A and the herbicide B, provided that the compositions together comprise the herbicide A and the herbicide B.

The compositions are applied to the plants mainly by spraying, in particular foliar spraying. Application can be carried out by customary spraying techniques using, for example, water as carrier and spray liquor rates of 10 to 2000 l/ha or 50 to 1000 l/ha (for example from 50 to 500 l/ha). Application of the herbicidal compositions by the low-volume and the ultra-low-volume method is possible, as is their application in the form of microgranules.

In the case of a post-emergence treatment of the plants, the herbicidal mixtures or compositions according to the invention are preferably applied by foliar application. Application may be effected, for example, by usual spraying techniques with water as the carrier, using amounts of spray mixture of approx. 50 to 1000 l/ha.

In the use of the invention, the application rate of the herbicide A, calculated as the free acid of imazamox, is generally from 1 to 200 g/ha and in particular from 2 to 100 g/ha or from 5 to 50 g/ha.

In the use of the invention, the application rate of the herbicide B, bentazone, calculated as such, is generally from 10 to 4000 g/ha, in particular from 50 to 2000 g/ha, preferably from 100 to 1000 g/ha.

The compositions usually contain, besides the combinations of of A and B at least one formulation additive. Generally, the formulation additive comprises one or more surfactants and, optionally, one or more formulation auxiliaries commonly used in crop protection. The compositions include both liquid dilute compositions as well as concentrate formulations containing, besides the active ingredients, at least one organic or inorganic carrier material and one or more formulation additives, in particular one or more surfactants and, if desired, one or more further auxiliaries customary for crop protection compositions.

The compositions when used in the the invention may be used as such or in combination with adjuvants which are conventionally used with herbicides, and which include, in particular, blends of paraffinic oils with non-ionic or anionic surfactants (crop-oils and crop-oil concentrates), blends of esterified vegetable-oils, such as methylated seed oil, and non-ionic or anionic surfactants, blends of vegetable oils and non-ionic or anionic surfactants such as Dash®, Hasten®, Agrirob®, Trend® and Mero®.

Particularly suitable adjuvants comprise a polar solvent and a phosphate ester of the formula (A)

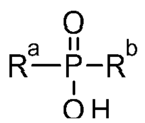

(A)

in which

- $R^a$ is $R^1$-O-$(C_nH_{2n}O)_x$-$(C_mH_{2m}O)_y$-,
- $R^b$ is $R^1$-O-$(C_nH_{2n}O)_x$-$(C_mH_{2m}O)_y$- or OH,
- $R^1$ is $C_6$-$C_{30}$-alkyl,
- n, m independently of one another are a value of from 2 to 6,
- x, y independently of one another are a value of from 0 to 100,
- x+y gives a value of from 1 to 100, and
- wherein the phosphate ester of the formula (A) can be present as the free acid and/or as a salt and wherein the polar solvent is dimethyl sulfoxide or tetramethylene sulfone.

The formulation may be in the form of a single package formulation containing the herbicides A and B, together with liquid and/or solid carrier materials, and one or more formulation additives, such as one or more surfactants and, if desired, one or more further auxiliaries customary for crop protection compositions. The formulation may be in the form of a two package formulation (two kits of parts formulation), wherein one package contains a formulation of herbicide A, while the other package contains a formulation of the herbicide B and wherein both formulations contain at least one liquid and/or solid carrier material and one or more formulation additives, such as one or more surfactants and, if desired, one or more further auxiliaries customary for crop protection compositions. The formulation may also be in the form of a two package formulation (two kits of parts formulation), wherein one package contains a formulation of herbicide A, while the other package contains a formulation of the herbicide B, and wherein both formulations contain at least one liquid and/or solid carrier material and one or more formulation additives, such as one or more surfactants and, if desired, one or more further auxiliaries customary for crop protection compositions. In the case of two package formulations the two formulations are preferably mixed prior to application. Preferably, the mixing is performed as a tank mix, i.e. the formulations are mixed immediately prior or upon dilution with water.

In the formulations used in the present invention, the active ingredients, i.e. the herbicides A and B, may be present in suspended, emulsified or dissolved form. The formulations used in the invention can be in the form of aqueous solutions, powders, suspensions, also highly-concentrated aqueous, oily or other suspensions or dispersions, aqueous emulsions, aqueous microemulsions, aqueous suspo-emulsions, oil dispersions, pastes, dusts, materials for spreading or granules.

Depending on the formulation type and the active ingredient, they comprise one or more liquid or solid carriers, if appropriate, surfactants (such as dispersants, protective colloids, emulsifiers, wetting agents and tackifiers), and, if appropriate, further auxiliaries which are customary for formulating crop protection products. The person skilled in the art is sufficiently familiar with the recipes for such formulations. Further auxiliaries include e.g. organic and inorganic thickeners, bactericides, antifreeze agents, antifoams, colorants and, for seed formulations, adhesives.

Suitable carriers include liquid and solid carriers. Liquid carriers include e.g. non-aqueous solvents, such as cyclic and aromatic hydrocarbons, e.g. paraffins, tetrahydronaphthalene, alkylated naphthalenes and their derivatives, alkylated benzenes and their derivatives, alcohols, such as methanol, ethanol, propanol, butanol and cyclohexanol, ketones, such as cyclohexanone, strongly polar solvents, e.g. amines, such as N-methylpyrrolidone, and water as well as mixtures thereof. Solid carriers include e.g. mineral earths, such as silicas, silica gels, silicates, talc, kaolin, limestone, lime, chalk, bole, loess, clay, dolomite, diatomaceous earth, calcium sulfate, magnesium sulfate, magnesium oxide, ground synthetic materials, fertilizers, such as ammonium sulfate, ammonium phosphate, ammonium nitrate, ureas, and products of vegetable origin, such as cereal meal, tree bark meal, wood meal and nutshell meal, cellulose powders, or other solid carriers.

Suitable surfactants (adjuvants, wetting agents, tackifiers, dispersants and also emulsifiers) are the alkali metal salts, alkaline earth metal salts and ammonium salts of aromatic sulfonic acids, for example lignosulfonic acids (e.g. Borrespers-types, Borregaard), phenolsulfonic acids, naphthalenesulfonic acids (Morwet types, Akzo Nobel) and dibutylnaphthalenesulfonic acid (Nekal types, BASF SE), and of fatty acids, alkyl- and alkylarylsulfonates, alkyl sulfates, lauryl ether sulfates and fatty alcohol sulfates, and salts of sulfated hexa-, hepta- and octadecanols, and also of fatty alcohol glycol ethers, condensates of sulfonated naphthalene and its derivatives with formaldehyde, condensates of naphthalene or of the naphthalenesulfonic acids with phenol and formaldehyde, polyoxyethylene octylphenol ether, ethoxylated isooctyl-, octyl- or nonylphenol, alkylphenyl or tributylphenyl polyglycol ether, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignosulfite waste liquors and proteins, denaturated proteins, polysaccharides (e.g. methylcellulose), hydrophobically modified starches, polyvinyl alcohol (Mowiol types Clariant), polycarboxylates (BASF SE, Sokalan types), polyalkoxylates, polyvinylamine (BASF SE, Lupamine types), polyethyleneimine (BASF SE, Lupasol types), polyvinylpyrrolidone and copolymers thereof.

Suitable further formulation auxiliaries are e.g. thickeners, antifoams, bactericides, antifreeze agents, colourants and adhesives.

Examples of thickeners (i.e. compounds which impart to the formulation modified flow properties, i.e. high viscosity in the state of rest and low viscosity in motion) are polysaccharides, such as xanthan gum (Kelzan® from Kelco), Rhodopol® 23 (Rhone Poulenc) or Veegum® (from R.T. Vanderbilt), and also organic and inorganic sheet minerals, such as Attaclay® (from Engelhardt).

Examples of antifoams are silicone emulsions (such as, for example, Silikon® SRE, Wacker or Rhodorsil® from Rhodia), long-chain alcohols, fatty acids, salts of fatty acids, organofluorine compounds and mixtures thereof.

Bactericides can be added for stabilizing the aqueous herbicidal formulations. Examples of bactericides are bactericides based on diclorophen and benzyl alcohol hemiformal (Proxel® from ICI or Acticide® RS from Thor Chemie and Kathon® MK from Rohm & Haas), and also isothiazolinone derivates, such as alkylisothiazolinones and benzisothiazolinones (Acticide MBS from Thor Chemie).

Examples of antifreeze agents are ethylene glycol, propylene glycol, urea or glycerol.

Examples of colorants are both sparingly water-soluble pigments and water-soluble dyes.

Examples which may be mentioned are the dyes known under the names Rhodamin B, C.I. Pigment Red 112 and C.I. Solvent Red 1, and also pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples of adhesives are polyvinylpyrrolidone, polyvinyl acetate, polyvinyl alcohol and tylose.

To prepare emulsions, pastes or oil dispersions, the active the components, as such or dissolved in an oil or solvent, can be homogenized in water by means of wetting agent, tackifier, dispersant or emulsifier. Alternatively, it is possible to prepare concentrates consisting of active substance, wetting agent, tackifier, dispersant or emulsifier and, if desired, solvent or oil, and these concentrates are suitable for dilution with water.

Powders, materials for spreading and dusts can be prepared by mixing or concomitant grinding of the active the components with a solid carrier.

Granules, e.g. coated granules, impregnated granules and homogeneous granules, can be prepared by binding the active ingredients to solid carriers.

The formulations used in the invention comprise a herbicidally effective amount of the composition as described above.

The concentrations of the active ingredients in the formulations can be varied within wide ranges. In general, the formulations comprise from 1 to 98% by weight, preferably 10 to 60% by weight, of active ingredients (sum of herbicide compound A and herbicide compound B). The active ingredients are employed in a purity of from 90% to 100%, preferably 95% to 100% (according to NMR spectrum).

The active herbicide compounds A and B as well as the compositions used in the invention can, for example, be formulated as follows:

1. Products for dilution with water

A Water-soluble concentrates

10 parts by weight of the herbicides A and B, are dissolved in 90 parts by weight of water or a water-soluble solvent. As an alternative, wetters or other adjuvants are added. The active compound dissolves upon dilution with water. This gives a formulation with an active compound content of 10% by weight.

B Dispersible concentrates

20 parts by weight of the herbicides A and B, are dissolved in 70 parts by weight of cyclohexanone with addition of 10 parts by weight of a dispersant, for example polyvinylpyrrolidone. Dilution with water gives a dispersion. The active compound content is 20% by weight.

1. C Emulsifiable concentrates

15 parts by weight of the herbicides A and B, are dissolved in 75 parts by weight of an organic solvent (e.g. alkylaromatics) with addition of calcium dodecylbenzenesulfonate and castor oil ethoxylate (in each case 5 parts by weight). Dilution with water gives an emulsion. The formulation has an active compound content of 15% by weight.

D Emulsions

25 parts by weight of the herbicides A and B, are dissolved in 35 parts by weight of an organic solvent (e.g. alkylaromatics) with addition of calcium dodecylbenzenesulfonate and castor oil ethoxylate (in each case 5 parts by weight). This mixture is introduced into 30 parts by weight of water by means of an emulsifier (Ultraturrax) and made into a homogeneous emulsion. Dilution with water gives an emulsion. The formulation has an active compound content of 25% by weight.

E Suspensions

In an agitated ball mill, 20 parts by weight of the herbicides A and B, are comminuted with addition of 10 parts by weight of dispersants and wetters and 70 parts by weight of water or an organic solvent to give a fine active compound suspension. Dilution with water gives a stable suspension of the active compound. The active compound content in the formulation is 20% by weight.

F Water-dispersible granules and water-soluble granules

50 parts by weight of the herbicides A and B, are ground finely with addition of 50 parts by weight of dispersants and wetters and made into water-dispersible or water-soluble granules by means of technical appliances (for example extrusion, spray tower, fluidized bed). Dilution with water gives a stable dispersion or solution of the active compound. The formulation has an active compound content of 50% by weight.

G Water-dispersible powders and water-soluble powders

75 parts by weight of the herbicides A and B, are ground in a rotor-stator mill with addition of 25 parts by weight of dispersants, wetters and silica gel. Dilution with water gives a stable dispersion or solution of the active compound. The active compound content of the formulation is 75% by weight.

H Gel formulations

In a ball mill, 20 parts by weight of the herbicides A and B, 10 parts by weight of dispersant, 1 part by weight of

gelling agent and 70 parts by weight of water or of an organic solvent are mixed to give a fine suspension. Dilution with water gives a stable suspension with active compound content of 20% by weight.

2. Products to be applied undiluted

2. I Dusts

5 parts by weight of the herbicides A and B, are ground finely and mixed intimately with 95 parts by weight of finely divided kaolin. This gives a dusting powder with an active compound content of 5% by weight.

3. J Granules (GR, FG, GG, MG)

0.5 parts by weight of the herbicides A and B, are ground finely and associated with 99.5 parts by weight of carriers. Current methods here are extrusion, spray-drying or the fluidized bed. This gives granules to be applied undiluted with an active compound content of 0.5% by weight.

K ULV solutions (UL)

10 parts by weight of the herbicides A and B, are dissolved in 90 parts by weight of an organic solvent, for example xylene. This gives a product to be applied undiluted with an active compound content of 10% by weight.

Aqueous use forms can be prepared from emulsion concentrates, suspensions, pastes, wettable powders or water-dispersible granules by adding water.

It may, furthermore, be beneficial to apply the compositions of the invention alone or in combination with mineral salt solutions, which are employed for treating nutritional and trace element deficiencies. Other additives, such as non-phytotoxic oils and oil concentrates, may also be added.

USE EXAMPLES:

The effect of the use according to the invention on the growth of undesirable plants compared to the herbicidal active compounds alone was demonstrated by the following greenhouse experiments.

The culture containers used were plastic pots containing loamy sand with approximately 3.0% of humus as substrate. The seeds of the test plants were sown separately for each species.

For the pre-emergence and post-emergence treatments, a tank mix containing formulations of the herbicide A and the herbicide B which had been suspended or emulsified in water, were applied by means of finely/evenly distributing spray nozzles. In all use examples, plants were grown in a greenhouse environment.

The containers were irrigated gently to promote germination and growth. For the post-emergence treatment, the test plants were grown to growth stage 10 to 22, depending on the plant variety or to a height, depending on the plant habit, and only then treated with the active compounds which had been suspended or emulsified in water. To this end, the test plants were either sown directly and grown in the same containers or they were first grown separately as seedlings and transplanted into the test containers a few days prior to treatment.

Depending on the species, the plants were kept at 10 - 25°C and 20 - 35°C, respectively. The test period extended over 1 to 4 weeks. During this time, the plants were tended and their response to the individual treatments was evaluated.

The herbicide compounds applied in the examples were used as commercially available formulations which have been diluted with tap water to a suitable concentration.

Beyond® herbicide: 120g/l SL formulation of imazamox as racemate (rac)
Basagran: 87% SG formulation of bentazone
R-imazamox: tech. material, 120 g/l SL formulation
DAT: days after treatment

The evaluation for the damage caused by the chemical compositions was carried out using a scale from 0 to 100%, compared to the untreated control plants. Here, 0 means no damage and 100 means complete destruction of the plants.

The plants used in the greenhouse experiments belonged to the following species:

| Scientific Name | Code |
|---|---|
| *Convolvulus arvensis* | CONAR |

(continued)

| Scientific Name | Code |
|---|---|
| *Digitaria sanguinalis* | DIGSA |

Colby's formulae were applied to determine whether the composition showed synergistic action: S. R. Colby (1967) "Calculating synergistic and antagonistic responses of herbicide combinations", Weeds 15, p. 22 ff.

$$E = X + Y - (X \cdot Y/100) \quad (I)$$

where in formula I

X = effect in percent using herbicide A + B at an application rate a or a+b, respectively;
Y = effect in percent using herbicide C at application rate c, respectively
E = expected effect (in %) of A + B + C at application rates a + b + c.

The value E corresponds to the effect (plant damage or injury) which is to be expected if the activity of the individual compounds is just additive. If the observed effect is higher than the value E calculated according to Colby, a synergistic effect is present.
(X*): expected value according to Colby

Table 1:

| R-imazamox [g ai/ha] | rac-imazamox [g ai/ha] | bentazone [g ai/ha] | DIGSA (damage in %, 7 DAT) |
|---|---|---|---|
| 2 | - | - | 75 |
| - | 2.5 | - | 75 |
| - | - | 54 | 0 |
| 2 | - | 54 | 85 (75*) |
| - | 2.5 | 54 | 80 (75*) |

Table 2:

| R-imazamox [g ai/ha] | rac-imazamox [g ai/ha] | bentazone [g ai/ha] | CONAR (damage in %, 20 DAT) |
|---|---|---|---|
| 8 | - | - | 60 |
| - | 10 | - | 60 |
| - | - | 216 | 10 |
| 8 | - | 216 | 80 (64*) |
| - | 10 | 216 | 50 (64*) |

## Claims

**1.** The use of herbicidally active combinations consisting of herbicides A and B and optionally one or more formulation auxiliaries for the selective control of undesirable vegetation in cultures of crop plants, wherein

a. the herbicide A is R-imazamox, any non-racemic mixture of R-imazamox and S-imazamox, wherein the proportion of R-imazamox is at least 80% by weight, or an agriculturally acceptable salt or ester thereof; and
b. the herbicide B is bentazone, or an agriculturally acceptable salt thereof; and
c. wherein the relative weight ratio of the herbicide A and the herbicide B is in the range from 1:125 to 1:5; and
d. wherein the undesirable vegetation is selected from the genera Abutilon, Alisma, Alopecurus, Amaranthus, Ambrosia, Ammannia, Ammi, Aneilema, Atriplex, Avena, Bidens, Brassica, Butomus, Chenopodium, Cirsium, Convolvulus, Cyperus, Datura, Digitaria, Echinochloa, Fumaria, Galinsoga, Helianthus, Heliotropium, Heteranthera, Hibiscus, Leersia, Leptochloa, Lolium, Matricaria, Orobanche, Oryza, Panicum, Poa, Polygonum,

Portulaca, Scirpus, Setaria, Solanum, Sonchus, Sorghum, Stachys, Stellaria, and Xanthium; and
e. wherein the crop plant is selected from imidazolinone tolerant crops.

**2.** The use according to claim 1, wherein the imidazolinone tolerant crop is selected from legumes, wheat, barley, corn, rice and sorghum.

**3.** The use according to claim 1, wherein the imidazolinone tolerant crop is selected from legumes.

**4.** The use according to any of the preceding claims, wherein the undesirable vegetation comprises volunteer crop selected from the genus Brassica.

**5.** The use according to any of the preceding claims, wherein the undesirable vegetation comprises herbicide resistant species.

**Patentansprüche**

**1.** erwendung von herbizid wirksamen Kombinationen bestehend aus Herbiziden A und B und gegebenenfalls einem oder mehreren Formulierungshilfsmitteln zur selektiven Bekämpfung unerwünschten Pflanzenwuchses in Kulturen von Kulturpflanzen, wobei

a. das Herbizid A R-Imazamox, eine beliebige nichtracemische Mischung von R-Imazamox und S-Imazamox, wobei der Anteil von R-Imazamox mindestens 80 Gew.-% beträgt, oder ein landwirtschaftlich unbedenkliches Salz oder Ester davon ist; und
b. das Herbizid B Bentazon oder ein landwirtschaftlich unbedenkliches Salz davon ist; und
c. wobei das relative Gewichtsverhältnis von Herbizid A zu Herbizid B im Bereich von 1:125 bis 1:5 liegt; und
d. wobei der unerwünschte Pflanzenwuchs aus den Gattungen Abutilon, Alisma, Alopecurus, Amaranthus, Ambrosia, Ammannia, Ammi, Aneilema, Atriplex, Avena, Bidens, Brassica, Butomus, Chenopodium, Cirsium, Convolvulus, Cyperus, Datura, Djgitaria, Echinochloa, Fumaria, Galinsoga, Helianthus, Heliotropium, Heteranthera, Hibiscus, Leersia, Leptochloa, Lolium, Matricaria, Orobanche, Oryza, Panicum, Poa, Polygonum, Portulaca, Scirpus, Setaria, Solanum, Sonchus, Sorghum, Stachys, Stellaria und Xanthium ausgewählt ist; und
e. wobei die Kulturpflanze aus imidazolinontoleranten Kulturen ausgewählt ist.

**2.** Verwendung nach Anspruch 1, wobei die imidazolinontolerante Kultur aus Hülsenfrüchten, Weizen, Gerste, Mais, Reis und Sorghum ausgewählt ist.

**3.** Verwendung nach Anspruch 1, wobei die imidazolinontolerante Kultur aus Hülsenfrüchten ausgewählt ist.

**4.** Verwendung nach einem der vorhergehenden Ansprüche, wobei der unerwünschte Pflanzenwuchs Ausfallpflanzen umfasst, die aus der Gattung Brassica ausgewählt ist.

**5.** Verwendung nach einem der vorhergehenden Ansprüche, wobei der unerwünschte Pflanzenwuchs herbizidresistente Arten umfasst.

**Revendications**

**1.** Utilisation de combinaisons actives sur le plan herbicide constituées d’herbicides A et B et éventuellement d’un ou plusieurs auxiliaires de formulation pour la lutte sélective contre de la végétation indésirable dans des cultures de végétaux cultivés, dans laquelle

a. l’herbicide A est R-imazamox, tout mélange non racémique de R-imazamox et S-imazamox, dans laquelle la proportion de R-imazamox est d’au moins 80 % en poids, ou un sel ou ester acceptable sur le plan agricole de celui-ci ; et
b. l’herbicide B est bentazone ou un sel acceptable sur le plan agricole de celle-ci ; et
c. dans laquelle le rapport pondéral relatif de l’herbicide A et de l’herbicide B est dans la plage de 1:125 à 1:5 ; et
d. dans laquelle la végétation indésirable est choisie parmi les genres Abutilon, Alisma, Alopecurus, Amaranthus, Ambrosia, Ammannia, Ammi, Aneilema, Atriplex, Avena, Bidens, Brassica, Butomus, Chenopodium, Cirsium,

Convolvulus, Cyperus, Datura, Djgitaria, Echinochloa, Fumaria, Galinsoga, Helianthus, Heliotropium, Heteranthera, Hibiscus, Leersia, Leptochloa, Lolium, Matricaria, Orobanche, Oryza, Panicum, Poa, Polygonum, Portulaca, Scirpus, Setaria, Solanum, Sonchus, Sorghum, Stachys, Stellaria, et Xanthium ; et
e. dans laquelle le végétal cultivé est choisi parmi des cultures tolérantes à une imidazolinone.

2. Utilisation selon la revendication 1, dans laquelle la culture tolérante à une imidazolinone est choisie parmi les légumineuses, le blé, l'orge, le maïs, le riz et le sorgho.

3. Utilisation selon la revendication 1, dans laquelle la culture tolérante à une imidazolinone est choisie parmi les légumineuses.

4. Utilisation selon l'une quelconque des revendications précédentes, dans laquelle la végétation indésirable comprend une culture spontanée choisie dans le genre Brassica.

5. Utilisation selon l'une quelconque des revendications précédentes, dans laquelle la végétation indésirable comprend une espèce résistante à un herbicide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1050533 A
- US 6339158 B
- EP 913089 A
- US 6214768 B
- WO 15104242 A
- US 2008305954 A
- CN 107602533
- US 2014073510 A
- US 2007238618 A
- WO 2015151088 A
- US 2016324154 A
- WO 02015701 A
- EP 374753 A
- WO 93007278 A
- WO 9534656 A
- EP 427529 A
- EP 451878 A
- WO 0318810 A
- WO 0352073 A
- WO 03018810 A
- EP 392225 A


### Non-patent literature cited in the description


- The Pesticide Manual. BCPC Alton, 2006, 587
- The Pesticide Manual. 1994, 90
- **JING WEI et al.** *Bull Environ Contam Toxicol*, 2016, vol. 96, 242-247
- **C. WANG et al.** Enantioselective Phytotoxicity and the Relative Mechanism of Chiral Herbicides. *Current Protein and Peptide Science*, 2017, 15-21
- **COBUCCI, T.** ; **MACHADO, E**. *Planta Daninha*, 1999, vol. 17, 419-432
- **ARNOLD, R.N et al.** *Research Progress Report of Western Society of Weed Science*, 08 March 2005, 101
- Viper ADV Herbicide. *Pesticide Labels*, 16 December 2016, 1-8
- **LINS et al.** *Weed Technology*, June 2005, vol. 19 (2), 411-415
- **ZOLLINGER, R. et al.** *Western Society of Weed Science*, 1998, vol. 51, 1-14
- **PETERSEN J.** *Julius-Kühn-Archiv*, 01 January 2014, 692-700
- *Pest Management Science*, 2005, vol. 61, 246
- *Pest Management Science*, 2005, vol. 61, 258
- *Pest Management Science*, 2005, vol. 61, 277
- *Pest Management Science*, 2005, vol. 61, 269
- *Pest Management Science*, 2005, vol. 61, 286
- *Pest Management Science*, 2008, vol. 64, 326
- *Pest Management Science*, 2008, vol. 64, 332
- *Weed Science*, 2009, vol. 57, 108
- *Australian Journal of Agricultural Research*, 2007, vol. 58, 708
- *Science*, 2007, vol. 316, 1185